# EUROPÄISCHE PATENTSCHRIFT

(11) **EP 2 654 928 B1**
(45) Veröffentlichungstag und Bekanntmachung des Hinweises auf die Patenterteilung: **04.07.2018**
(21) Anmeldenummer: 11811343.0
(22) Anmeldetag: 21.12.2011
(51) Int. Cl.: B01D 53/86, B01D 53/94, B01J 29/00, B01J 29/70, B01J 29/85, C01B 37/08

(54) **VERFAHREN ZUR UMSETZUNG STICKSTOFFHALTIGER VERBINDUNGEN**
METHOD FOR TRANSFORMING NITROGEN-CONTAINING COMPOUNDS
PROCÉDÉ DE TRANSFORMATION DE COMPOSÉS AZOTÉS

(30) Priorität: 22.12.2010 DE 102010055728
(43) Veröffentlichungstag der Anmeldung: 30.10.2013
(73) Patentinhaber: Clariant Produkte (Deutschland) GmbH, 65929 Frankfurt am Main (DE)
(72) Erfinder: SAUERBECK, Silke, 83052 Bruckmühl (DE); KLOSE, Frank, 83026 Rosenheim (DE); TISSLER, Arno, 93105 Tegernheim (DE); REZNIKOV, Grigory, 83052 Bruckmühl (DE)
(74) Vertreter: Clariant Produkte (Deutschland) GmbH
(86) Internationale Anmeldenummer: PCT/EP2011/073693
(87) Internationale Veröffentlichungsnummer: WO 2012/085157

(56) Entgegenhaltungen:
- DE-A1-102010 046 245
- US-A- 4 500 651
- US-A- 4 684 617
- US-A- 4 867 954

## Beschreibung

Die vorliegende Erfindung betrifft ein Verfahren zur selektiven katalytischen Umsetzung stickstoffhaltiger Verbindungen. Die Umsetzung betrifft dabei entweder die selektive katalytische Reduktion (SCR) von Stickoxiden, oder die selektive katalytische Oxidation (SCO) von Stickstoff-Wasserstoffverbindungen und stickstoffhaltigen organischen Verbindungen, vorzugsweise in Abgasströmen von motorischen und nichtmotorischen Verbrennungsprozessen sowie industriellen Anwendungen. Der Katalysator umfasst hierbei Titano-Silico-Alumo-Phosphat-34 (im Folgenden als TAPSO-34 bezeichnet), das mit Kupfer-Kationen modifiziert vorliegt.

Unter selektiver katalytischer Reduktion von Stickoxiden wird im Sinne dieser Erfindung deren Umsetzung mit Reduktionsmitteln wie Kohlenwasserstoffen, CO, Ammoniak, anderen Stickstoff-Wasserstoffverbindungen und stickstoffhaltige organische Verbindungen zu Stickstoff, Wasser (und Kohlendioxid) verstanden.

Unter selektiver katalytischer Oxidation wird im Sinne dieser Erfindung die Umsetzung von Ammoniak, anderen Stickstoff-Wasserstoffverbindungen und stickstoffhaltigen organischen Verbindungen zu Stickstoff, Wasser (und Kohlendioxid) verstanden. In anderen Worten betrifft die vorliegende Erfindung die Verwendung eines TAPSO-34, das mit Kupfer-Kationen modifiziert vorliegt, zur selektiven katalytischen Reduktion von Stickoxiden und zur selektiven katalytischen Oxidation von Stickstoff-Wasserstoffverbindungen und stickstoffhaltigen organischen Verbindungen, vorzugsweise in Abgasströmen von motorischen und nichtmotorischen Verbrennungsprozessen sowie industriellen Anwendungen.

Bei motorischen Verbrennungsprozessen, wie in Dieselmotoren und Benzin-Einspritzer-Motoren sowie in nichtmotorischen Verbrennungsprozessen, aber auch bei bestimmten industriellen Anwendungen, z.B. der Herstellung von Salpetersäure werden sogenannte DeNOx-Katalysatoren benötigt, die durch selektive katalytische Reduktion Stickoxide im Abgasstrom zu Stickstoff reduzieren. Hierfür werden oft Molekularsiebe benötigt, die eine hohe Oberfläche bieten und in die die katalytisch aktiven Komponenten oberflächenaktiv eingebracht werden können. Als Molekularsiebe werden hierfür im Stand der Technik in der Regel Zeolithe oder Zeolith-ähnliche Materialien verwendet, die mit einem Aktivmetall dotiert sind, das die wesentliche katalytisch aktive Komponente darstellt.

Im Stand der Technik sind beispielsweise Alumo-Silikate (Zeolithe), Alumo-Phosphate (ALPOs) und Silico-Alumo-Phosphate (SAPOs) seit Längerem als aktive Komponenten für Raffinerie-, Petrochemie- und Chemiekatalysatoren sowie für die Abgasreinigung sowohl in stationären als auch in mobilen Anwendungen bekannt. Diese Gruppen werden oft auch nur unter der Sammelbezeichnung Zeolithe geführt.

DE 102010046245 A1 offenbart die Herstellung von Alumo-Phosphaten unter Rückgewinnung von Templaten, umfassend die Schritte des a) Bereitstellens einer Reaktionsmischung aus einer Aluminium-Quelle, einer Phosphat-Quelle und eines Templats in Wasser, b) Umsetzen der Edukte unter hydrothermalen Bedingungen in einem Reaktor zu einem Alumo-Phosphat, c) Entspannens des Drucks im Reaktor und Auffangen eines aus dem Reaktor entweichenden templathaltigen Gemisches, d) Separierens des Templats vom Gemisch, e) Rückführens des Templats in Schritt a), wodurch sich ein kostengünstigeres und umweltfreundliches Verfahren ergibt, da unter Rückgewinnung von Templaten erneut Alumo-Phosphate erhalten werden können.

US 4867954 A offenbart ein Verfahren zur katalytischen Reduktion eines oder mehrerer Stickoxide in einem Gasstrom, enthaltend eines oder mehrere Stickoxide und optional eines oder mehrere Schwefeloxide, das das Kontaktieren des Gasstroms und Ammoniak mit einer mikroporösen Molekularsieb-Zusammensetzung, bei Bedingungen, die die Reduktion erlauben, umfasst, wobei in dem Verfahren die Ammoniakmenge höher ist, als die stöchiometrisch notwendige Menge, die notwendig ist, für die katalytische Reduktion des einen oder der mehreren Stickoxide, wobei die mikroporöse Molekularsieb-Zusammensetzung, vor dem Kontaktieren in dem Verfahren, (i) optional mit einer anorganischen oder organischen Säure säurebehandelt ist, (ii) mit Wasserstoff Kationen-ausgetauscht ist und (iii) optional, Metallkationen ausgetauscht ist und wobei mindestens ein Teil des überschüssigen Ammoniaks in dem Verfahren oxidiert wird, ohne dass dies einen wesentlichen abträglichen Effekt auf die katalytische Reduktion des einen oder der mehreren Stickoxide aus dem Gasstrom hat.

US 20080202107 A1 betrifft ein Verfahren zur Herstellung von reinem Silikoaluminophosphat (SAPO-34), das Cu enthält, wobei das Molekularsieb-Material in einem einzigen Verfahrensschritt erhalten wird. Dieser Verfahrensschritt ist ein hydrothermaler Kristallisierungs-Verfahrensschritt, der mit einer wässrigen Lösung durchgeführt wird, die neben der Siliziumquelle, Aluminiumoxid und Phosphor, den üblichen verwendeten Gerüstelementen des Zeolithgerüsts, bereits all das Cu, das für die Herstellung des finalen Cu enthaltenden Silikoaluminophosphat(SAPO-34) notwendig ist, enthält. Zusätzlich betrifft die Offenbarung ein reines Kupfer enthaltendes Molekularsieb-Material als solches, das die SAPO-34 Gerüststruktur aufweist, das eine molare Zusammensetzung gemäß der Formel: Cu 0,007-0,125 Si 0,01-0,25 A1 0,44-0,54 P 0,25-0,49 02 aufweist, das einen Fremdphasenanteil unter 25 % aufweist und das eine BET-Oberfläche von mindestens 400 m²/g aufweist.

Strukturen dieser Gruppe werden gemäß der "Structure Commission of the International Zeolite Association" aufgrund ihrer Porengröße entsprechend den IUPAC-Regeln (International Union of Pure and Applied Chemistry) eingeteilt. Sie kristallisieren in mehr als 200 verschiedenen Verbindungen in zwei Dutzend verschiedenen Strukturen. Klassifiziert werden sie aufgrund ihrer Porengrößen.

SAPOs sind typischerweise mittels Hydrothermal-Synthese erhältlich, ausgehend von reaktiven Alumo-Phosphat-Gelen, oder den einzelnen Al-, Si-, P-Komponenten. Die Kristallisation der erhaltenen Silico-Alumo-Phosphate (SAPOs) wird mittels Zugabe von Struktur-dirigierenden Templaten, Kristallisationskeimen oder Elementen erreicht (EP 103 117 A1, US 4,440,871, US 7,316,727).

Silico-Alumo-Phosphate (SAPOs) eignen sich als Molekularsiebe insbesondere in SCR-Katalysatoren zur selektiven katalytischen Reduktion von NOₓ, da bei der selektiven Reduktion von NOₓ-Gasen oft eine große hydrothermale Stabilität nötig ist, da häufig Abgasströme mit hohem Wassergehalt bei hohen Temperaturen auf den Katalysator treffen. Auch bei SCO-Anwendungen sind oft Abgase mit hohem Wassergehalt abzureinigen, so dass die Silico-Alumo-Phosphate auch hier technische Vorteile besitzen und damit von großem wirtschaftlichem Interesse sind. Bei den genannten SAPOs nimmt hierbei unter Reaktionsbedingungen die Oberfläche nicht ab (im Vergleich zu Zeolithen) und die Azidität reduziert sich so gut wie nicht. Allerdings besitzen SAPOs jedoch den Nachteil, dass sie in wässriger Phase thermisch relativ instabil sind. So amorphisiert z.B. SAPO-34 schon bei niedrigen Temperaturen - u.a. schon bei der Herstellung des Katalysators in wässrigen Phasen.

Es war deshalb die Aufgabe der vorliegenden Erfindung, ein Katalysatormaterial für SCR oder SCO bereitzustellen, das schon während der Katalysatorpräparation keinen Schaden nimmt und anschließend über eine lange Laufzeit eine möglichst konstante Aktivität aufweist.

Diese Aufgabe wurde gelöst durch das erfindungsgemäße Verfahren zur selektiven katalytischen Umsetzung stickstoffhaltiger Verbindungen, wobei ein Katalysator verwendet wird, der TAPSO-34, das mit Kupfer-Kationen modifiziert wurde, umfasst, sowie durch die Anwendung von TAPSO-34, das mit Kupfer-Kationen modifiziert wurde, in SCR- und SCO-Anwendungen. Die Verwendung von TAPSO-34, das mit Kupfer-Kationen modifiziert wurde, führt im Vergleich zu den Silico-Alumo-Phosphaten zu einer höheren Aktivität bei bereits niedrigeren Temperaturen.

Ebenso wie die genannten SAPOs ist TAPSO-34, eine kristalline Substanz mit einer Raumnetzstruktur, die aus TiO₄/(SiO₄)/AlO₄/PO₄-Tetraedern besteht und durch gemeinsame Sauerstoffatome zu einem regelmäßigen dreidimensionalen Netzwerk verknüpft ist. Alle diese genannten Tetraedereinheiten ergeben zusammen das sogenannte "Framework". Weitere Einheiten, die nicht aus den Tetraedereinheiten des Grundgerüsts bestehen, bezeichnet man als sogenanntes "Extraframework".

Die Struktur des TAPSO-34 enthält charakteristische Hohlräume. Ebenso wie die Zeolithe stellt dieser Strukturtyp ein Molekularsieb dar.

Unter dem Begriff "Molekularsieb" versteht man natürliche und synthetisch hergestellte Gerüststrukturen mit Hohlräumen und Kanälen, wie beispielweise Zeolithe und verwandte Materialien, die ein starkes Absorptionsvermögen für Gase, Dämpfe und gelöste Stoffe mit bestimmten Molekülgrößen haben.

Es wurde überraschenderweise gefunden, dass TAPSO-34, das mit Kupfer-Kationen modifiziert wurde, besonders geeignet ist, als Molekularsieb in Abgasreinigungskatalysatorbauteilen, insbesondere in SCR- und SCO-Katalysatoren. Das TAPSO-34, das mit Kupfer-Kationen modifiziert wurde, eignet sich aufgrund seiner hohen Phasenreinheit, seiner Temperaturstabilität, seines hohen möglichen Beladungsanteils mit Übergangsmetallionen und seiner hohen Ammoniakspeicherkapazität hervorragend als Molekularsieb in SCR- und SCO-Katalysatoren.

Unter dem Begriff "Stickoxid" versteht man grundsätzlich alle denkbaren Stickstoffoxide der allgemeinen Formel NₓO_{y}, die beispielsweise bei motorischen und nichtmotorischen Verbrennungsprozessen, aber auch bei industriellen Prozessen entstehen können.

Unter dem Begriff "Katalysator" im erfindungsgemäßen Verfahren versteht man vorzugsweise einen Trägerkörper, der mit Kupfer-Kationen modifiziertes TAPSO-34, umfasst. Der Trägerkörper kann als Vollextrudat aus dem mit Kupfer-Kationen modifizierten TAPSO-34 gebildet werden, oder in Form eines Trägerkörpers vorliegen, der mit einer Zusammensetzung enthaltend das mit Kupfer-Kationen modifizierte TAPSO-34, beschichtet ist.

Der Trägerkörper ist vorzugsweise eingebettet in einer Einheit, die in der Abgasleitung eingebaut ist. Die Einheit weist vorzugsweise ein Katalysatorbett auf, in dem sich die Trägerkörper befinden. Durch Leiten des Abgasstroms über bzw. durch die im Katalysatorbett befindlichen Trägerkörper werden bei SCR-Anwendungen die Stickoxide und bei SCO-Anwendungen Stickstoff-Wasserstoffverbindungen wie Ammoniak und stickstoffhaltige organische Verbindungen vorzugsweise zu Stickstoff, Wasser (und Kohlendioxid) umgesetzt.

In den erfindungsgemäßen SCR-Anwendungen werden die Stickoxide unter Verbrauch eines Reduktionsmittels vorzugsweise zu N₂ reduziert. In den erfindungsgemäßen SCO-Anwendungen werden Stickstoff-Wasserstoffverbindungen wie Ammoniak und stickstoffhaltige organische Verbindungen unter Verbrauch eines Oxidationsmittels vorzugsweise zu N₂ und Wasser (und CO₂) oxidiert.

Als Reduktionsmittel bei SCR-Anwendungen kann im Sinne dieser Erfindung jegliches Reduktionsmittel, das zur katalytischen Reduktion von Stickoxiden geeignet ist, eingesetzt werden. Erfindungsgemäß bevorzugt sind die folgenden Reduktionsmittel: NH₃, Harnstoff, Kohlenwasserstoffe, Kohlenmonoxid, bei motorischen Verbrennungsprozessen nicht im Motorraum umgesetzter Kraftstoff, wobei NH₃ bzw. Harnstoff besonders bevorzugt sind.

Als Oxidationsmittel bei SCO-Anwendungen kann im Sinne dieser Erfindung jegliches Oxidationsmittel, das zur katalytischen Oxidation von Stickstoff-Wasserstoffverbindungen wie Ammoniak und stickstoffhaltigen organischen Verbindungen geeignet ist, eingesetzt werden. Erfindungsgemäß bevorzugt sind die folgenden Oxidationsmittel: Sauerstoff, Luft, Lachgas.

Das im erfindungsgemäßen Verfahren eingesetzte TAPSO-34 weist vorzugsweise eine Azidität von 1000-1500 pmol/g und besonders bevorzugt eine Azidität von 1100-1400 µmol/g auf, die mittels temperaturprogrammierter Desorption von Ammoniak ermittelt wird. Eine Azidität in diesem Bereich ist insbesondere wichtig, um bei SCR-Anwendungen die überwiegend aziden Reduktionsmittel, bzw. bei SCO-Anwendungen die Stickstoff-Wasserstoffverbindungen wie Ammoniak und stickstoffhaltigen organischen Verbindungen zu speichern.

Weiterhin bevorzugt ist es, dass das TAPSO-34 im erfindungsgemäßen Verfahren eine BET-Oberfläche im Bereich von 200 bis 1200 m²/g aufweist, insbesondere bevorzugt 400 bis 850 m²/g, noch stärker bevorzugt 500 bis 750 m²/g. Die BET-Oberfläche des mit Kupfer-Kationen modifizierten TAPSO-34 sollte nicht zu gering sein, da dann kein ausreichender Kontakt der Stickoxide mit den katalytisch-aktiven Komponenten vorhanden ist und somit die Reduktion der Stickoxide nicht in ausreichendem Maße stattfindet. Eine zu hohe BET-Oberfläche bringt den Nachteil mit sich, dass aufgrund der geringen Dichte des Materials dieses nicht mehr genügend temperaturstabil ist. Die BET-Oberfläche wird mittels Adsorption von Stickstoff nach DIN 66132 bestimmt.

Das TAPSO-34 weist eine sogenannte CHA-Struktur auf, wie sie aus der Klassifizierung der verschiedenen Topologien von Zeolithen bekannt ist. Die ausgezeichnete hydrothermale Stabilität von TAPSO-34 als auch die kleinen Porenöffnungen prädestinieren TAPSO-34, das mit Kupfer-Kationen modifiziert vorliegt, als selektiven Katalysator für die Reduktion von Stickoxiden.

Im Stand der Technik werden überwiegend nicht Zeolithe mit CHA-Struktur, sondern Zeolithe mit MFI- und BEA-Strukturen verwendet. Allerdings ist deren thermische Stabilität sehr begrenzt. So wurde bspw. festgestellt, dass in einem hydrothermalen Alterungstest (Bedingungen: 10 Volumenprozent H₂O; 700°C; Dauer 24 Stunden) die Oberfläche bei einem Zeolith mit BEA-Struktur um 11% und bei einem Zeolith mit MFI-Struktur um 8% abnimmt. Zudem zeigen beide Materialien nach dem Alterungstest signifikant niedrigere Werte hinsichtlich der Azidität, die mit temperaturprogrammierter Desorption von Ammoniak ermittelt wurde. Der Zeolith mit der BEA-Struktur verliert 54% seiner Azidität und der Zeolith mit der MFI-Struktur verliert 77% seiner Azidität. Demgegenüber verliert das erfindungsgemäße titanhaltige TAPSO-34 im Alterungstest nur 19% seiner Azidität. Aufgrund seiner hohen hydrothermalen Stabilität ist somit das erfindungsgemäß eingesetzte TAPSO-34, das mit Kupfer-Kationen modifiziert vorliegt besonders geeignet für den Einsatz in feuchter Atmosphäre bei hohen Temperaturen, wie sie in bestimmten motorischen und nichtmotorischen SCR- und SCO-Anwendungen herrschen.

TAPSO-34 das mit Kupfer-Kationen modifiziert vorliegt ist insbesondere für motorische Anwendungen geeignet, da es in der Startphase von Motoren als sogenannte Kaltstartfalle eine hohe Adsorption von unverbranntem Kraftstoff aufweist, der nach dem Aufwärmen des Systems als Reduktionsmittel für die Stickoxide zum Einsatz kommen kann.

Das in dem erfindungsgemäßen Verfahren eingesetzte Molekularsieb TAPSO-34, ist im Stand der Technik beispielsweise aus der EP 161 488 und US 4,684,617 bekannt.

Das in dem erfindungsgemäßen Verfahren eingesetzte TAPSO-34 weist aufgrund des Austauschs von Phosphoratomen durch Titan- bzw. Siliciumatome negative Ladungen auf, die durch Kationen kompensiert werden. Bei der Synthese von TAPSO-34, die seit vielen Jahren aus der EP 161 488 bekannt ist, entsteht TAPSO-34 vorzugsweise in der protonierten oder in der Na⁺-Form. In dem erfindungsgemäßen Verfahren liegt das TAPSO-34 in einer modifizierten Form vor, bei der als Gegenionen mindestens Kupfer-Kationen zur Kompensation der negativen Ladungen vorzugsweise in den Hohlräumen vorliegen. Die im Inneren der Gerüststruktur vorliegenden Kupfer-Kationen verleihen der Struktur die katalytischen Eigenschaften. Der Ionenaustausch von H⁺ bzw. Na⁺ durch Kupfer-Kationen kann sowohl in flüssiger als auch in fester Form durchgeführt werden, wobei neben Kupfer-Kationen auch verschiedene Übergangsmetallkationen gleichzeitig oder nacheinander in mehreren Austauschschritten eingebracht werden können. Darüber hinaus sind Gasphasenaustauschprozesse bekannt, die aber für technische Prozesse zu aufwändig sind. Nachteilig beim derzeitigen Stand der Technik ist, dass beim festen Ionenaustausch zwar eine definierte Menge an Metallionen in das TAPSO-34-Gerüst gebracht werden kann, aber keine homogene Verteilung der Metallionen vorliegt. Beim flüssigen Ionenaustausch kann dagegen eine homogene Metallionenverteilung im TAPSO-34 erreicht werden. Neben den genannten Verfahren kann das Dotieren bzw. Modifizieren mit einem oder mehreren Metallkationen durch wässrige Imprägnierung oder das Incipient-Wetness Verfahren durchgeführt werden. Diese Dotier- bzw. Modifizierverfahren sind im Stand der Technik bekannt. Es ist besonders bevorzugt, dass das Dotieren bzw. Modifizieren mit Kupfer-Kationen mittels einer oder mehrerer Kupferverbindungen durch wässrigen Ionenaustausch durchgeführt wird, wobei sowohl Kupfersalze als auch Kupferkomplexe als Ionenlieferanten Verwendung finden.

Das mit dem Kupferkationen modifizierte TAPSO-34 weist vorzugsweise die folgende Formel auf:

[(TiₓAlySi_{z}P_{q})O₂]^{-a} [M^{b+}]_{a/b},

wobei die verwendeten Symbole und Indices die folgenden Bedeutungen aufweisen: x + y + z + q = 1; 0,010 ≤ x ≤ 0,110; 0,400 ≤ y ≤ 0,550; 0 ≤ z ≤ 0,090; 0,350 ≤ q ≤ 0,450; a = y - q (mit der Maßgabe, dass y vorzugsweise größer als q ist); M^{b+} stellt das Übergangsmetallkation mit der Ladung b+ dar, wobei b eine ganze Zahl größer oder gleich 1 ist, vorzugsweise 1, 2, 3 oder 4, noch stärker bevorzugt 1, 2 oder 3 und am stärksten bevorzugt 1 oder 2.

Die Anzahl der negativen Ladungen a des TAPSO-34 ergibt sich aus der überschüssigen Anzahl von Aluminium-Atomen zu der Anzahl der Phosphor-Atome. Geht man davon aus, dass auf jedes Ti-, Al-, Si- und P-Atom zwei Sauerstoffatome kommen, dann hätten diese Einheiten die folgenden Ladungen: Die Einheit TiO₂ und die Einheit SiO₂ sind ladungsneutral, die Einheit AlO₂ weist aufgrund der Dreiwertigkeit von Aluminium eine negative Ladung auf und die Einheit PO₂ weist aufgrund der Fünfwertigkeit von Phosphor eine positive Ladung auf. Es ist erfindungsgemäß besonders bevorzugt, dass die Anzahl der Aluminium-Atome größer ist als die Anzahl der Phosphor-Atome, sodass das TAPSO-34 insgesamt negativ geladen ist. Dies wird in der oben genannten Formel ausgedrückt durch den Index a, der die Differenz der vorhandenen Aluminium-Atome abzüglich der Phosphor-Atome darstellt. Dies ist insbesondere deshalb der Fall, da positiv geladene PO₂⁺-Einheiten durch ladungsneutrale TiO₂- bzw. SiO₂-Einheiten substituiert werden.

Zusätzlich zu den genannten SiO₂-, TiO₂-, AlO₂⁻- und PO₂⁺-Einheiten, die das Framework des TAPSO-34 bilden und dessen Verhältnis die Wertigkeit des TAPSO-34 bestimmt, kann das TAPSO-34 auch Al- und P-Einheiten enthalten, die als solche formal als ladungsneutral anzusehen sind, beispielsweise, weil nicht O₂⁻-Einheiten die Koordinationsstellen besetzen, sondern weil andere Einheiten, wie beispielsweise OH⁻ oder H₂O an dieser Stelle sitzen, vorzugsweise wenn diese endständig bzw. randständig in der Struktur vorhanden sind. Diesen Anteil dieser Einheiten nennt man dann das sogenannte "Extraframework" des TAPSO-34-Molekularsiebs.

Das im erfindungsgemäßen Verfahren verwendete TAPSO-34 weist vorzugsweise ein (Si + Ti)/(Al + P)-Molverhältnis von 0,01 bis 0,5 zu 1, stärker bevorzugt von 0,02 bis 0,4 zu 1, noch stärker bevorzugt 0,05 bis 0,3 zu 1 und am stärksten bevorzugt 0,07 bis 0,2 zu 1 auf.

Das Si/Ti-Verhältnis liegt vorzugsweise im Bereich von 0 bis 20, stärker bevorzugt im Bereich von 0,5 bis 10, noch stärker bevorzugt im Bereich von 1 bis 8. Das Al/P-Verhältnis in Bezug auf alle Einheiten des TAPSO-34, d.h. die des Frameworks und des Extraframeworks des TAPSO-34 liegt vorzugsweise im Bereich von 0,5 bis 1,5, stärker bevorzugt im Bereich von 0,70 bis 1,25. Das Al/P-Verhältnis nur im Bezug auf das Framework des TAPSO-34 liegt vorzugsweise im Bereich von größer 1 bis 1,5, stärker bevorzugt im Bereich von 1,05 bis 1,25.

Das Kupfer-Kation im mit Kupfer-Kationen modifizierten TAPSO-34 liegt vorzugsweise im Bereich von 0,01 Gew.-% bis 20 Gew.-%, bevorzugt im Bereich von 0,1 bis 10 Gew.-%, stärker bevorzugt im Bereich von 0,2 bis 8 Gew.-% und am stärksten bevorzugt 0,5 bis 7 Gew.-% bezogen auf das Gesamtgewicht des TAPSO-34 vor.

Nach der Herstellung des mit Kupfer-Kationen-modifizierten TAPSO-34 liegt dieses meist in der Form eines Pulvers vor. Dieses Pulver wird dann entweder zu Extrudaten verformt, unter Zuhilfenahme von oxidischen und/oder organischen Bindemitteln zu Vollextrudaten/Wabenkatalysatoren verformt oder über die Zwischenstufe eines Washcoats auf keramische oder metallische Trägerkörper, insbesondere wabenförmige Trägerkörper aufgebracht. Das im erfindungsgemäßen Verfahren eingesetzte mit Kupfer-Kationen modifizierte TAPSO-34 liegt vorzugsweise als Vollextrudat oder auf einem Trägerkörper in Form einer Beschichtung vor.

Insbesondere werden die Vollextrudate in Form von Waben hergestellt oder die mit dem Vollextrudat beschichteten Trägerkörper sind vorzugsweise wabenförmige Trägerkörper.

Liegt das im dem erfindungsgemäßen Verfahren verwendete mit Kupfer-Kationen modifizierte TAPSO-34 in der Form eines Vollextrudats vor, so umfasst das Vollextrudat vorzugsweise das mit Kupfer-Kationen modifizierte TAPSO-34 und mindestens ein oxidisches und/oder organisches Bindemittel.

Das Vollextrudat wird vorzugsweise durch Stangpressen einer katalytisch-aktiven Zusammensetzung umfassend das mit Kupfer-Kationen modifizierte TAPSO-34 und mindestens eines oxidischen und/oder organischen Bindemittels hergestellt. Das Vollextrudat ist vorzugsweise ein Extrudat in Wabenform. Neben den Bindemitteln kann die genannte Zusammensetzung auch weitere Metalloxide, Promotoren, Stabilisatoren und/oder Füllstoffe enthalten. In dieser Zusammensetzung liegt das mit Kupfer-Kationen modifizierte TAPSO-34 vorzugsweise im Bereich von 5 bis 95 Gew.-%, stärker bevorzugt 50 bis 90 Gew.-% bezogen auf die gesamte Zusammensetzung vor.

Liegt das mit Kupfer-Kationen modifizierte TAPSO-34 auf einem Trägerkörper in Form einer Beschichtung vor, so wird zur Herstellung des beschichteten Trägerkörpers die genannte Zusammensetzung vorzugsweise zu einem Washcoat verarbeitet, der zur Beschichtung von Trägerkörpern geeignet ist. Vorzugsweise umfasst so ein Washcoat 5 bis 90 Gew.-%, mehr bevorzugt 10 bis 80 Gew.-%, besonders bevorzugt 10 bis 70 Gew.-% des im erfindungsgemäßen Verfahren eingesetzten mit Kupfer-Kationen modifizierten TAPSO-34 bezogen auf die Gesamtmasse des Washcoats. Der erfindungsgemäße Washcoat enthält zusätzlich zu den oben genannten Komponenten Wasser oder ein Lösungsmittel sowie Bindemittel. Das Bindemittel der Zusammensetzung dient dazu, bei Auftragen auf einen Trägerkörper das mit Kupfer-Kationen modifizierten TAPSO-34 zu binden. Das Lösungsmittel dient dazu, dass sowohl das mit Kupfer-Kationen modifizierten TAPSO-34 als auch das Bindemittel in auftragbarer Form auf den Katalysatorträger aufgebracht werden kann.

Die vorliegende Erfindung betrifft auch die Verwendung eines mit Kupfer-Kationen modifizierten TAPSO-34 zur Herstellung von Abgasreinigungskatalysatorbauteilen. Dabei sind auch hier die bevorzugten Varianten des im erfindungsgemäßen Verfahren verwendeten mit Kupfer-Kationen modifizierten TAPSO-34 bevorzugt. Unter Abgasreinigungskatalysatorbauteilen versteht man Einheiten in Abgasströmen, in denen die oben definierten Katalysatoren vorliegen, und in denen bei SCR-Anwendungen die Stickoxide reduziert bzw. bei SCO-Anwendungen die Stickstoff-Wasserstoffverbindungen wie Ammoniak und die stickstoffhaltigen organischen Verbindungen oxidiert werden.

Demgemäß betrifft die vorliegende Erfindung auch Abgasreinigungskatalysatorbauteile umfassend ein mit Kupfer-Kationen modifizierten TAPSO-34. Dabei sind auch hier die bevorzugten Varianten des im erfindungsgemäßen Verfahren verwendeten mit Kupfer-Kationen modifizierten TAPSO-34 bevorzugt.

### Figuren:

Die Figuren 1 bis 7 sollen die vorliegende Erfindung weiterhin veranschaulichen:
- Figur 1:: zeigt die Umsetzung von NOₓ in der SCR-Reaktion für Ausführungsbeispiel 1 (frisch - Test 1 bzw. gealtert - Test 2) und für Vergleichsbeispiel 1 in Abhängigkeit von der Temperatur.
- Figur 2:: zeigt die Umsetzung von NH₃ in der SCR-Reaktion für Ausführungsbeispiel 1 (frisch - Test 1 bzw. gealtert - Test 2) und für Vergleichsbeispiel 1 in Abhängigkeit von der Temperatur.
- Figur 3:: zeigt die Umsetzung von NOₓ in der SCR-Reaktion für Ausführungsbeispiel 2, für Vergleichsbeispiel 2 und für Vergleichsbeispiel 3 in Abhängigkeit von der Temperatur (Test 3).
- Figur 4:: zeigt die Umsetzung von NH₃ in der SCR-Reaktion für Ausführungsbeispiel 2, für Vergleichsbeispiel 2 und für Vergleichsbeispiel 3 in Abhängigkeit von der Temperatur (Test 3).
- Figur 5:: zeigt die Bildung von N₂O (Ausbeute bezogen auf NH₃) in der SCR-Reaktion für Ausführungsbeispiel 2, für Vergleichsbeispiel 2 und Vergleichsbeispiel 3 in Abhängigkeit von der Temperatur (Test 3).
- Figur 6:: zeigt die Umsetzung von NH₃ in der SCO-Reaktion für Ausführungsbeispiel 2 und für Vergleichsbeispiel 2 in Abhängigkeit von der Temperatur (Test 4).
- Figur 7:: zeigt die Bildung von N₂O (Ausbeute bezogen auf NH₃) in der SCO-Reaktion für Ausführungsbeispiel 2 und für Vergleichsbeispiel 2 in Abhängigkeit von der Temperatur (Test 4).

Die vorliegende Erfindung soll nun anhand der folgenden Beispiele nicht einschränkend veranschaulicht werden:

### Beispiele:

### Ausführungsbeispiel 1:

500 g CuTAPSO-34 (5,3 Gew.-% Cu, Hersteller Süd-Chemie AG) wurde mit 100 g Pural SB (Sasol Germany GmbH), 133,3 g H₂O, 16,7 g HNO₃ konz., 10,7 g Glycerin (65 % p.a., Merck) und 270,3 g Tyloselösung (70 g Tylose MH50 G4 DEAC 098000 (ShinEtsu) in 1000 g demin. H₂O) zu strangförmigen Extrudaten mit einem Durchmesser von ca. 1,6 mm und einer Länge 0,5 bis 5 mm verformt. Anschließend wurden die Extrudate für 16 h bei 120 °C getrocknet und bei 500 °C (Aufheiztrate 1 °C/min.) für 5 h in Luft kalziniert.

### Ausführungsbeispiel 1 gealtert:

Die Extrudate des Ausführungsbeispiel 1 wurden auf 700 °C aufgeheizt und bei dieser Temperatur für 24 h in Wasserdampfatmosphäre (10 % Volumenprozent H₂O) gealtert.

### Vergleichsbeispiel 1:

CuZSM-5 (4 % Gew.-% Cu, Hersteller Mizusawa) wurde mit 100 g Pural SB (Sasol Germany GmbH), 133,3 g H₂O, 16,7 g HNO₃ conc., 10,7 g Glycerin (65 % p.a., Merck) und 242 g Tyloselösung (140 g Tylose MH50 G4 DEAC 098000 (ShinEtsu) in 2000 g demin. H₂O) zu strangförmigen Extrudaten mit einem Durchmesser von ca. 1,6 mm und einer Länge 0,5 bis 5 mm verformt. Anschließend wurden die Extrudate für 16 h bei 120 °C getrocknet und bei 500 °C (Aufheizrate 1 °C/min.) für 5 h in Luft kalziniert.

Sowohl der erfindungsgemäße Katalysator als auch das Vergleichsbeispiel wurden in der selektiven katalytischen Reduktion von NOₓ mit NH₃ in der Gegenwart von Sauerstoff und Wasserdampf in einem zur Unterdrückung von Blindreaktionen mit Quarzrohr ausgekleideten Festbettreaktor getestet. Die Testbedingungen sind in der nachfolgenden Tabelle 1 angegeben.

**Tabelle 1:**

| Test | GHSV [h⁻¹] | Testgaszusammensetzung (Rest N₂) | | | | |
|---|---|---|---|---|---|---|
| | | NH₃ [ppmv] | NO [ppmv] | NO₂ [ppmv] | H₂O [Vol.-%] | O₂ [Vol.-%] |
| 1 | 30000 | 250 | 225 | 30 | 2,6 | 2,9 |
| 2 | 30000 | 450 | 360 | 40 | 2,6 | 2,9 |

Für die Testgaszusammensetzung gilt für die frischen Katalysatorproben (Test 1) NH₃ / NOₓ = 0,91, so dass der maximale NOₓ-Umsatz 91 % nicht überschreiten kann. Im Falle der gealterten Probe (Test 2) betrug das Verhältnis NH₃ / NOₓ = 1,15, so dass maximal 87 % des Ammoniaks durch Stickoxide umgesetzt werden können. Der überschüssige Ammoniak wird hier durch Sauerstoff gemäß der SCO-Reaktion umgesetzt.

### Ausführungsbeispiel 2:

Aus 100 g entionisiertem Wasser, 100 g kupferhaltigen TAPSO-34 (Kupfer: 5,3 Gew.-%, Süd-Chemie AG), 22,6 g Bindzil 2034DI (EKA Chemicals) und 4,4 g 65%-ige Salpetersäure (Merck) wurde ein Washcoat hergestellt. Ein Keramik-Substrat (75 mm*100 mm, 200 cpsi von Rauschert) wurde in den Washcoat getaucht. Nach dem Trocknen wurde die Wabe von 40 °C auf 550 °C innerhalb von 4 h in Luft hochgeheizt und für 3 h bei dieser Temperatur gehalten.

### Vergleichsbeispiel 2:

Aus 800 g entionisiertem Wasser, 666,5 g kupferhaltigem Zeolith Beta (Kupfer: 3,8 Gew.-%, Süd-Chemie AG), 160 g Bindzil 2034DI (EKA Chemicals) und 26,5 g 65%-ige Salpetersäure (Merck) wurde ein Washcoat hergestellt. Eine Cordierit-Wabe (ø 20 mm, 75 mm, 200 cpsi von Rauschert) wurde in den Washcoat getaucht. Nach dem Trocknen wurde die Wabe von 40 °C auf 550 °C innerhalb von 4 h in Luft hochgeheizt und für 3 h bei dieser Temperatur gehalten.

### Vergleichsbeispiel 3:

Aus 100 g entionisiertem Wasser, 111,1 g kupferhaltigem SAPO-34 (Kupfer: 5,6 Gew.-%, Süd-Chemie AG) und 22,65 g Bindzil 2034DI (EKA Chemicals) wurde ein Washcoat hergestellt. Ein Keramik-Substrat (75 mm*100 mm, 200 cpsi von Rauschert) wurde in den Washcoat getaucht. Nach dem Trocknen wurde die Wabe von 40 °C auf 550 °C innerhalb von 4 h in Luft hochgeheizt und für 3 h bei dieser Temperatur gehalten.

Sowohl der erfindungsgemäße Katalysator als auch die Katalysatoren der Vergleichsbeispiele 2 und 3 wurden in der selektiven katalytischen Reduktion von NOₓ mit NH₃ in der Gegenwart von Sauerstoff und Wasserdampf in einem zur Unterdrückung von Blindreaktionen mit Quarzrohr ausgekleideten Festbettreaktor getestet. Die Testbedingungen sind in der nachfolgenden Tabelle 2 angegeben.

**Tabelle 2:**

| Test | GHSV [h⁻¹] | Testgaszusammensetzung (Rest N₂) | | | | |
|---|---|---|---|---|---|---|
| | | NH₃ [ppmv] | NO [ppmv] | NO₂ [ppmv] | H₂O [Vol.-%] | O₂ [Vol.-%] |
| 3 | 30000 | 450 | 360 | 40 | 2,6 | 2,9 |
| 4 | 20000 | 1000 | - | - | 0,2 | 20,5 |

Für die Gaszusammensetzung im Test 3 gilt für das Verhältnis NH₃ / NOₓ = 1,15, so dass maximal 87 % des Ammoniaks durch Stickoxide umgesetzt werden können. Der überschüssige Ammoniak wird hier durch Sauerstoff gemäß der SCO-Reaktion umgesetzt. Test 4 entspricht der selektiven katalytischen Oxidation (SCO) von Ammoniak mit Luft.

### Ergebnisse:

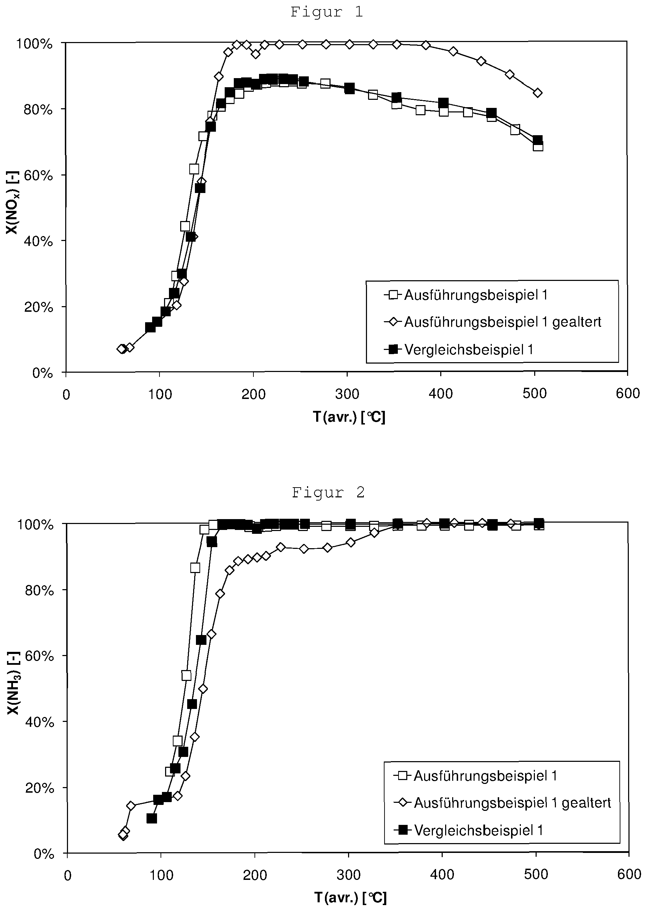

Die Figuren 1 und 2 und die Tabelle 3 zeigen die gemessenen Umsätze für NOₓ und NH₃ der in Ausführungsbeispiel 1 und Vergleichsbeispiel 1 hergestellten Katalysatorproben in der SCR-Reaktion. Sowohl bezüglich NOₓ als auch bezüglich NH₃ sind die für das Ausführungsbeispiel 1 gemessenen Umsätze höher als beim Vergleichsbeispiel 1. Beide Proben zeigen keine messbare Bildung von Lachgas.

**Tabelle 3:**

| Vergleichsbeispiel 1 (Test 1) | | | Ausführungsbeispiel 1 frisch (Test 1) | | | Ausführungsbeispiel 1 gealtert (Test 2) | | |
|---|---|---|---|---|---|---|---|---|
| T (avr. ) [°C] | NOₓ [%] Umsat z | NH₃ [%] Umsat z | T (avr. ) [°C] | NOₓ [%] Umsat z | NH₃ [%] Umsat z | T (avr. ) [°C] | NOₓ [%] Umsat z | NH₃ [%] Umsat z |
| 504,4 | 70,12 | 99,73 | 504,7 | 68,19 | 99,23 | 504,1 | 84,42 | 99,24 |
| 454,5 | 78,45 | 99,48 | 480,1 | 73,32 | 99,23 | 474,2 | 90,03 | 99,66 |
| 403,8 | 81,50 | 99,74 | 454,9 | 77,28 | 99,28 | 443,9 | 94,10 | 99,84 |
| 353,2 | 83,14 | 99,76 | 429,7 | 78,69 | 99,24 | 414,2 | 97,06 | 99,87 |
| 303,4 | 85,91 | 99,71 | 404,4 | 78,82 | 99,24 | 384,8 | 98,93 | 99,82 |
| 254,9 | 88,01 | 99,73 | 378,9 | 79,33 | 99,19 | 353,7 | 99,27 | 99,33 |
| 242,9 | 88,68 | 99,76 | 353,6 | 81,25 | 99,17 | 328,6 | 99,29 | 96,99 |
| 232,6 | 88,92 | 99,77 | 328,4 | 84,15 | 99,15 | 303,2 | 99,29 | 94,03 |
| 221,7 | 88,84 | 99,74 | 302,9 | 86,21 | 99,13 | 278,2 | 99,29 | 92,44 |
| 212,3 | 88,87 | 99,76 | 277,3 | 87,41 | 99,15 | 253,3 | 99,29 | 92,09 |
| 203,4 | 87,38 | 98,41 | 252,5 | 87,46 | 99,12 | 228,6 | 99,29 | 92,59 |
| 193,3 | 87,89 | 99,61 | 242,9 | 88,09 | 99,65 | 212,7 | 99,28 | 89,93 |
| 185,2 | 87,63 | 99,65 | 233,3 | 87,88 | 99,72 | 203,2 | 96,42 | 89,56 |
| 175,4 | 84,97 | 99,76 | 223,6 | 88,14 | 99,16 | 193,5 | 99,29 | 89,02 |
| 166,2 | 81,53 | 99,55 | 214,2 | 87,78 | 98,99 | 182,9 | 99,29 | 88,45 |
| 154,9 | 74,50 | 94,44 | 204,5 | 87,18 | 98,99 | 173,7 | 97,03 | 85,67 |
| 143,3 | 55,93 | 64,67 | 195,4 | 86,73 | 99,06 | 163,7 | 89,60 | 78,64 |
| 133,0 | 41,05 | 45,22 | 185,3 | 84,46 | 99,81 | 154,4 | 76,04 | 66,36 |
| 123,7 | 29,93 | 30,69 | 175,3 | 82,82 | 99,85 | 145,0 | 57,83 | 49,82 |
| 115,3 | 23,94 | 25,80 | 165,6 | 80,48 | 99,86 | 136,2 | 41,03 | 35,17 |
| 106,0 | 18,41 | 16,97 | 156,9 | 77,84 | 99,65 | 126,2 | 27,53 | 23,36 |
| 97,4 | 15,27 | 16,09 | 147,0 | 71,61 | 98,16 | 117,9 | 20,24 | 17,32 |
| 90,2 | 13,55 | 10,40 | 137,2 | 61,64 | 86,49 | 67,9 | 7,60 | 14,42 |
| | | | 127,4 | 44,25 | 53,85 | 61,8 | 7,13 | 6,85 |
| | | | 117,7 | 29,16 | 33,96 | 59,8 | 7,11 | 5,29 |
| | | | 109,9 | 20,97 | 24,69 | 59,2 | 7,13 | 5,79 |

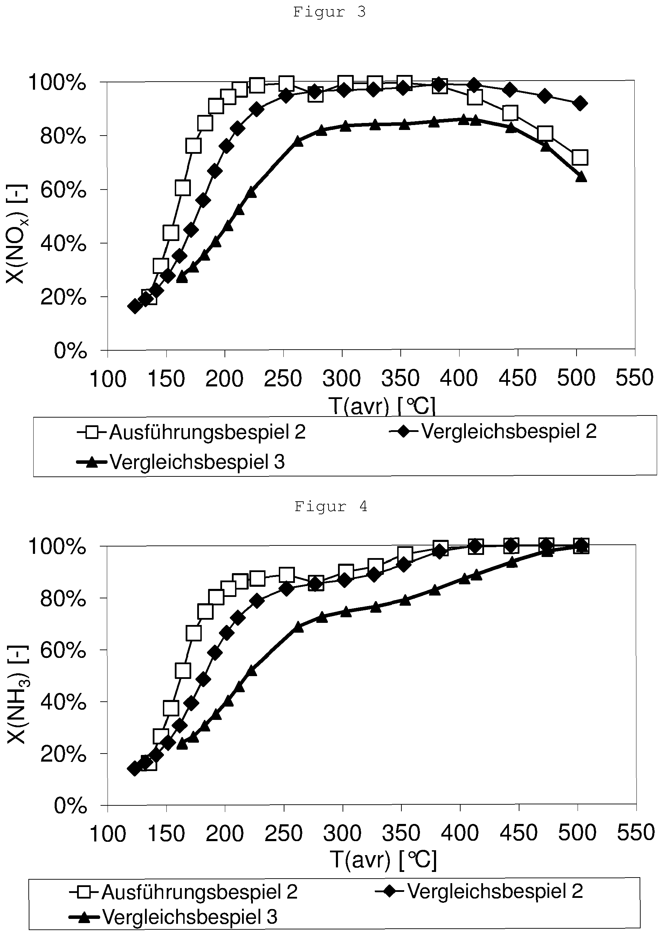

Die Figuren 3, 4 und 5 und die Tabellen 4 und 5 zeigen die gemessenen Umsätze bezüglich Ammoniak und Stickoxiden (Testgaszusammensetzung nach Test 3) sowie die Ausbeute an Lachgas der in Ausführungsbeispiel 2 und den Vergleichsbeispielen 2 und 3 hergestellten Katalysatorproben in der SCR-Reaktion. Sowohl bezüglich NOₓ als auch bezüglich NH₃ sind die für das Ausführungsbeispiel 2 gemessenen Umsätze höher als bei den Vergleichsbeispielen 2 und 3. Die Probe in Vergleichsbeispiel 2 zeigt zudem eine geringe, jedoch unerwünschte Bildung von Lachgas, die nicht beim Ausführungsbeispiel 2 zu beobachten ist.

**Tabelle 4:**

| Vergleichsbeispiel 2 (Test 3) | | | | Ausführungsbeispiel 2 (Test 3) | | | |
|---|---|---|---|---|---|---|---|
| T (avr.) [°C] | NO_{X} [%] Umsatz | NH₃ [%] Umsatz | N₂O [ppmv] Bildung | T (avr.) [°C] | NO_{X} [%] Umsatz | NH₃ [%] Umsatz | N₂O [ppmv] Bildung |
| 503,5 | 91,54 | 99,78 | 0 | 503,5 | 71,32 | 99,56 | 0 |
| 473,5 | 94,28 | 99,85 | 0 | 473,7 | 80,25 | 99,67 | 0 |
| 443,4 | 96, 56 | 99,85 | 0 | 443,8 | 87,98 | 99,68 | 0 |
| 413,1 | 98,47 | 99,66 | 0 | 413,9 | 93,96 | 99,39 | 0 |
| 382,8 | 98,74 | 97,54 | 0 | 383,8 | 98,06 | 98,82 | 0 |
| 352,6 | 97,39 | 92,57 | 0 | 353,8 | 99,23 | 96,49 | 0 |
| 327,1 | 96,94 | 88,90 | 0 | 328,6 | 99,23 | 91,97 | 0 |
| 301,9 | 96,75 | 86,74 | 0 | 303,3 | 99,27 | 89,89 | 0 |
| 277,1 | 96,21 | 85,28 | 0 | 278,0 | 95,12 | 85,64 | 0 |
| 252,7 | 94,63 | 83,48 | 1,80 | 252,9 | 99,15 | 88,77 | 0 |
| 227,4 | 89,69 | 78,84 | 6,99 | 227,9 | 98,59 | 87,53 | 0 |
| 211,4 | 82,57 | 72,35 | 7,38 | 213,4 | 97,12 | 86,35 | 0 |
| 201,9 | 75,98 | 66,44 | 5,18 | 203,4 | 94,33 | 83,59 | 0 |
| 191,7 | 66,63 | 58,82 | 2,92 | 193,0 | 90,89 | 80,27 | 0 |
| 181,7 | 55,89 | 48,57 | 0 | 183,7 | 84,51 | 74,71 | 0 |
| 171,3 | 44,81 | 39,31 | 0,38 | 173,7 | 76,10 | 66,36 | 0 |
| 161,4 | 35,12 | 30,64 | 0 | 164,3 | 60,43 | 51,84 | 0 |
| 151,5 | 27,71 | 24,03 | 0,07 | 154,3 | 43,72 | 37,31 | 0 |
| 141,6 | 22,24 | 19,38 | 0 | 145,7 | 31,39 | 26,44 | 0 |
| 132,4 | 19,09 | 16,59 | 0 | 135,6 | 19,81 | 16,29 | 0 |
| 123,4 | 16,45 | 14,29 | 0 | | | | |

**Tabelle 5:**

| Vergleichsbeispiel 3 (Test 3) | | | |
|---|---|---|---|
| T (avr.) [°C] | NO_{X} [%] Umsatz | NH₃ [%] Umsatz | N₂O [ppmv] Bildung |
| 504,2 | 64,25 | 99,41 | 0 |
| 474,6 | 75,65 | 97,58 | 0 |
| 444,6 | 82,71 | 93,60 | 0 |
| 414,5 | 85,42 | 88,78 | 0 |
| 404,3 | 85,67 | 87,22 | 0 |
| 378,9 | 84,82 | 82,84 | 0 |
| 353,8 | 83,84 | 78,93 | 0 |
| 328,7 | 83,90 | 76,42 | 0 |
| 303,3 | 83,39 | 74,58 | 0 |
| 283,1 | 81,80 | 72,53 | 0 |
| 262,6 | 77,73 | 68,72 | 0 |
| 222,3 | 58,97 | 51,95 | 0 |
| 212,1 | 52,47 | 45,77 | 0 |
| 202,7 | 46,46 | 40,28 | 0 |
| 192,4 | 40,54 | 35,02 | 0 |
| 182,7 | 35,51 | 30,58 | 0 |
| 173,1 | 31,05 | 26,31 | 0 |
| 163,6 | 27,78 | 23,95 | 0 |
| 163,5 | 27,17 | 23,73 | 0 |

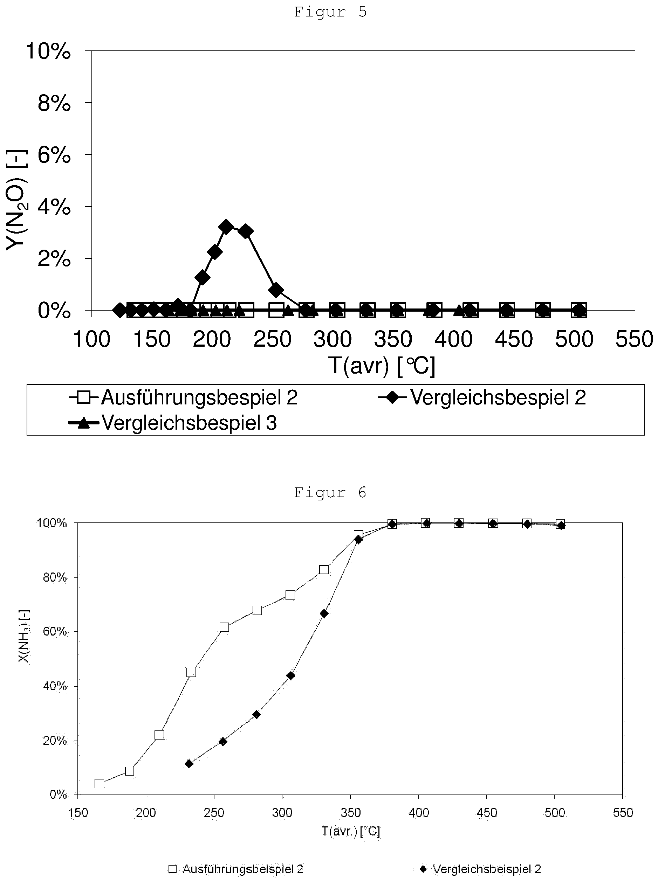

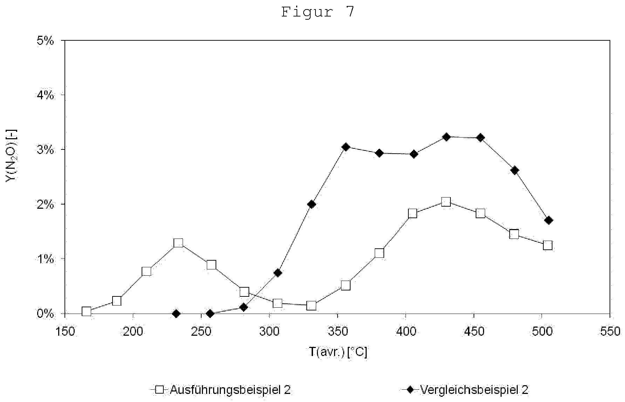

Die Figuren 6 und 7 und die Tabelle 6 zeigen die gemessenen Umsätze in der NH₃-Oxidation sowie die Ausbeuten von Ammoniak der in Ausführungsbeispiel 2 und Vergleichsbeispiel 2 hergestellten Katalysatorproben in der SCO-Reaktion. Die für das Ausführungsbeispiel 2 gemessenen Umsätze sind höher als beim Vergleichsbeispiel 2. Bei hohen Ammoniakumsätzen ist zudem die unerwünschte Bildung von Lachgas bei Ausführungsbeispiel 2 dagegen niedriger als bei Vergleichsbeispiel 2. Ferner wurde oberhalb von 450 °C bei beiden Proben eine geringe Bildung von Stickoxiden beobachtet, die Ausbeuten bezogen auf Ammoniak lagen jedoch selbst bei 500 °C unterhalb von 3 %

**Tabelle 6:**

| Vergleichsbeispiel 2 (Test 4) | | | Ausführungsbeispiel 2 (Test 4) | | |
|---|---|---|---|---|---|
| T (avr. ) [°C] | NH₃ [%] Umsatz | N₂O [%] Selektivität | T (avr.) [°C] | NH₃ [%] Umsatz | N₂O [%] Selektivität |
| 504,7 | 99,13 | 1,72 | 504,1 | 99,61 | 1,26 |
| 479,9 | 99,63 | 2,63 | 479,4 | 99,86 | 1,46 |
| 454,7 | 99,78 | 3,23 | 454,8 | 99,92 | 1,83 |
| 429,8 | 99,86 | 3,24 | 429,6 | 99,95 | 2,05 |
| 405,8 | 99,90 | 2,92 | 404,9 | 99,95 | 1,83 |
| 380,6 | 99,65 | 2,95 | 380,7 | 99,61 | 1,11 |
| 355,9 | 93,88 | 3,25 | 355,9 | 95,49 | 0,54 |
| 330,8 | 66,62 | 3,01 | 330,8 | 82,80 | 0,18 |
| 305,9 | 43,86 | 1,70 | 305,9 | 73,43 | 0,26 |
| 280,8 | 29,48 | 0,40 | 281,5 | 67,83 | 0,59 |
| 256,3 | 19,68 | 0,00 | 257,4 | 61,57 | 1,45 |
| 231,3 | 11,47 | 0,00 | 233,1 | 45,06 | 2,88 |
| | | | 209,9 | 22,12 | 3,49 |
| | | | 187,9 | 8,69 | 2,66 |
| | | | 165,8 | 4,16 | 1,03 |

## Patentansprüche

1. Verfahren zur selektiven katalytischen Umsetzung stickstoffhaltiger Verbindungen in Abgasströmen, wobei ein Katalysator verwendet wird, der TAPSO-34 umfasst und das TAPSO-34 mit Kupfer-Kationen modifiziert vorliegt.

2. Verfahren nach Anspruch 1, worin die Umsetzung stickstoffhaltiger Verbindungen die Reduktion von Stickoxiden ist.

3. Verfahren nach Anspruch 2, worin als Reduktionsmittel NH₃, Harnstoff, Kohlenmonoxid oder Kohlenwasserstoffverbindungen eingesetzt werden.

4. Verfahren nach Anspruch 1, worin die Umsetzung stickstoffhaltiger Verbindungen die Oxidation von Stickstoff-Wasserstoffverbindungen und/oder stickstoffhaltigen organischen Verbindungen ist.

5. Verfahren nach Anspruch 4, worin als Oxidationsmittel sauerstoffhaltige Gase, Luft oder Lachgas eingesetzt werden.

6. Verfahren nach einem der Ansprüche 1 bis 5, worin das TAPSO-34 eine BET-Oberfläche im Bereich von 500 bis 750 m²/g aufweist.

7. Verfahren nach Anspruch 1, worin das TAPSO-34 mit mindestens einem weiteren Übergangsmetallkation eines Metalls, ausgewählt aus der Gruppe bestehend aus Eisen, Chrom, Mangan, Kobalt, Platin, Palladium, Rhodium, Silber und Gold modifiziert ist.

8. Verfahren nach einem der Ansprüche 1 bis 7, worin die Kupfer-Kationen im TAPSO-34 im Bereich von 0,5 Gew.-% bis 7 Gew.-%, bezogen auf das Gesamtgewicht des TAPSO-34 vorliegen.

9. Verfahren nach einem der Ansprüche 1 bis 8, worin das TAPSO-34 ein (Si + Ti)/(Al + P)-Molverhältnis im Bereich von 0,01 bis 0,5 aufweist.

10. Verfahren nach einem der Ansprüche 1 bis 9, worin das TAPSO-34 ein Si/Ti-Molverhältnis im Bereich von 0 bis 20 und/oder das TAPSO-34 ein Al/P-Molverhältnis im Bereich von größer 1 bis 1,5 aufweist.

11. Verwendung eines mit Kupfer-Kationen modifizierten TAPSO-34 zur selektiven katalytischen Umsetzung stickstoffhaltiger Verbindungen.

12. Verwendung eines mit Kupfer-Kationen modifizierten TAPSO-34 zur Herstellung eines Abgasreinigungskatalysatorbauteils.

13. Abgasreinigungskatalysatorbauteil umfassend einen mit Kupfer-Kationen modifizierten TAPSO-34.

## Claims

1. Process for the selective catalytic conversion of nitrogen-containing compounds in exhaust gas streams, wherein a catalyst comprising TAPSO-34 is used and the TAPSO-34 has been modified with copper cations.

2. Process according to Claim 1, wherein the conversion of nitrogen-containing compounds is the reduction of nitrogen oxides.

3. Process according to Claim 2, wherein NH₃, urea, carbon monoxide or hydrocarbon compounds are used as reducing agent.

4. Process according to Claim 1, wherein the conversion of nitrogen-containing compounds is the oxidation of nitrogen-hydrogen compounds and/or nitrogen-containing organic compounds.

5. Process according to Claim 4, wherein oxygen-containing gases, air or nitrous oxide are used as oxidizing agent.

6. Process according to any of Claims 1 to 5, wherein the TAPSO-34 has a BET surface area in the range from 500 to 750 m²/g.

7. Process according to Claim 1, wherein the TAPSO-34 has been modified with at least one further transition metal cation of a metal selected from the group consisting of iron, chromium, manganese, cobalt, platinum, palladium, rhodium, silver and gold.

8. Process according to any of Claims 1 to 7, wherein the copper cations are present in the TAPSO-34 in an amount in the range from 0.5% by weight to 7% by weight, based on the total weight of the TAPSO-34.

9. Process according to any of Claims 1 to 8, wherein the TAPSO-34 has an (Si + Ti) / (Al + P) molar ratio in the range from 0.01 to 0.5.

10. Process according to any of Claims 1 to 9, wherein the TAPSO-34 has an Si/Ti molar ratio in the range from 0 to 20 and/or the TAPSO-34 has an Al/P molar ratio in the range from > 1 to 1.5.

11. Use of a TAPSO-34 modified with copper cations for the selective catalytic conversion of nitrogen-containing compounds.

12. Use of a TAPSO-34 modified with copper cations for producing an exhaust gas purification catalyst component.

13. Exhaust gas purification catalyst component comprising a TAPSO-34 modified with copper cations.

## Revendications

1. Procédé de transformation catalytique sélective de composés azotés dans des courants de gaz d'échappement, selon lequel un catalyseur qui comprend TAPSO-34 est utilisé et TAPSO-34 se présente sous forme modifiée avec des cations cuivre.

2. Procédé selon la revendication 1, selon lequel la transformation de composés azotés est la réduction d'oxydes d'azote.

3. Procédé selon la revendication 2, selon lequel NH₃, l'urée, le monoxyde de carbone ou des composés hydrocarbonés sont utilisés en tant que réducteur.

4. Procédé selon la revendication 1, selon lequel la transformation de composés azotés est l'oxydation de composés d'azote et d'hydrogène et/ou de composés organiques azotés.

5. Procédé selon la revendication 4, selon lequel des gaz contenant de l'oxygène, l'air ou le gaz hilarant sont utilisés en tant qu'oxydant.

6. Procédé selon l'une quelconque des revendications 1 à 5, selon lequel TAPSO-34 présente une surface BET dans la plage allant de 500 à 750 m²/g.

7. Procédé selon la revendication 1, selon lequel TAPSO-34 est modifié avec au moins un autre cation de métal de transition d'un métal choisi dans le groupe constitué par le fer, le chrome, le manganèse, le cobalt, le platine, le palladium, le rhodium, l'argent et l'or.

8. Procédé selon l'une quelconque des revendications 1 à 7, selon lequel les cations cuivre sont présents dans TAPSO-34 dans la plage allant de 0,5 % en poids à 7 % en poids, par rapport au poids total de TAPSO-34.

9. Procédé selon l'une quelconque des revendications 1 à 8, selon lequel TAPSO-34 présente un rapport molaire (Si+Ti)/(Al+P) dans la plage allant de 0,01 à 0,5.

10. Procédé selon l'une quelconque des revendications 1 à 9, selon lequel TAPSO-34 présente un rapport molaire Si/Ti dans la plage allant de 0 à 20 et/ou TAPSO-34 présente un rapport molaire Al/P dans la plage allant de plus de 1 à 1,5.

11. Utilisation d'un TAPSO-34 modifié avec des cations cuivre pour la transformation catalytique sélective de composés azotés.

12. Utilisation d'un TAPSO-34 modifié avec des cations cuivre pour la fabrication d'un composant catalytique de purification de gaz d'échappement.

13. Composant catalytique de purification de gaz d'échappement comprenant un TAPSO-34 modifié avec des cations cuivre.
